# EUROPEAN PATENT SPECIFICATION

(11) **EP 4 559 796 B1**
(45) Date of publication and mention of the grant of the patent: **15.04.2026**
(21) Application number: 24214994.6
(22) Date of filing: 25.11.2024
(51) Int. Cl.: B62M 6/65

(54) **HUB DRIVE STRUCTURE**
NABENANTRIEBSSTRUKTUR
STRUCTURE D'ENTRAÎNEMENT DE MOYEU

(30) Priority: 27.11.2023 TW 112145862
(43) Date of publication of application: 28.05.2025
(73) Proprietor: Yao, Li-Ho, 106 Taipei City (TW)
(72) Inventor: Yao, Li-Ho, 106 Taipei City (TW); Hsieh, Pei-Sheng, 106 Taipei City (TW)
(74) Representative: Horak, Michael

(56) References cited:
- CN-B- 101 989 801
- CN-U- 209 375 366

## Description

### TECHNICAL FIELD OF THE INVENTION

The present invention relates to the technical field of hubs of electric vehicles, and more particularly to a hub drive structure including a driving motor, in which a stator of the motor is fixed through an internal hood to a hub shaft, so that when the motor is supplied with electrical power to operate a rotor to drive a hub, a firm and sound supporting force is obtained to effectively increase the initial driving force thereof and thus reduce unnecessary kinetic loss.

### DESCRIPTION OF THE PRIOR ART

Hub motors of electric power-assisted bicycles are divided into inner rotor type and outer rotor type, in which the inner rotor hub motor has the stator located at an outer side that is close to the hub housing, so that thermal heat energy of the coil is easier to dissipate to the outside, while the rotor is located at an inner side that is close to the hub shaft, so as to present an advantage of small moment of inertia and easy driving.

The manufacturers have developed a variety of inner rotor hub motors for electric-assisted bicycles, such as Taiwan Patent No. I455850 on "Bicycle Hub with Internally Arranged Motor", Taiwan Patent No. I680908 on "Electric Drive Hub System for Vehicles and Vehicle Including the System", and Taiwan Patent No. I770780 on "Inner Rotor Type Hub Motor". In view of the design of the existing hub motors, when the motor is being driven by supplying electrical power thereto, as the orientation of the stator is not stable, it is not possible to obtain effective supporting force so as to cause unnecessary kinetic loss and reducing the initial driving force of the hub. Further, the concentricity of the reduction gear set is poor, making it easy to generate jitter noise during driving and affecting the stability of operation. In addition, under the requirement of high reduction ratio, it also makes the hub set larger and heavier, increasing the load on the rider.

In other words, due to the imperfectness of the structural design of the existing hub drive structure, there are problems of insufficient supporting force and insufficient concentricity, resulting in issues of kinetic loss and noise, and there are also situations of being bulky and easy to damage under the requirement of high reduction ratio. Thu, further improvements are needed. This is also what the present invention intends to explore.

The document CN 209 375 366 U discloses a hub drive structure, comprising:a hub shaft;a hub, which is formed of a first hub casing and a second hub casing that are combinable in an opposite manner to each other and are respectively arranged at two ends of the hub shaft.

### SUMMARY OF THE INVENTION

Thus, the primary objective of the present invention is to provide a hub drive structure, in which a stator of a motor is fixed through an internal hood to a hub shaft, so that when the motor is supplied with electrical power to operate a rotor to drive a hub, a firm and sound supporting force is obtained to effectively increase the initial driving force of the hub and thus reduce unnecessary kinetic loss.

A secondary objective of the present invention is to provide a hub drive structure, which effectively ensures the concentricity of a gear set of a hub, in order to improve the operation stability thereof to reduce problems of jitter noise and to further reduce the volume of the hub through the gear set.

### BRIEF DESCRIPTION OF THE DRAWINGS

FIG. 1 is a perspective view of the present invention.
FIG. 2 is a perspective view of the present invention taken from another viewing angle.
FIG. 3 is an exploded view of the present invention, illustrating configurations of and relative relationships among primary components.
FIG. 4 is an exploded view showing a gear set of the structure of the present invention.
FIG. 5 is an exploded view showing an inner rotor one-way bearing of the structure of the present invention.
FIG. 6 is a lateral-side cross-sectional view of the present invention, illustrating the relative relationships among the primary components in an assembled condition.
FIG. 7 is an end-side cross-sectional view of the present invention taken along line A-A of FIG. 6.
FIG. 8 is an end-side cross-sectional view of the present invention taken along line B-B of FIG. 6.
FIG. 9 is an end-side cross-sectional view of the present invention taken along line C-C of FIG. 6, illustrating the configuration of electric-assisted output transmission of the inner rotor one-way bearing.
FIG. 10 is another end-side cross-sectional view of the present invention taken along line C-C of FIG. 6, illustrating the configuration of man-power output idle rotation of the inner rotor one-way bearing.
FIG. 11 is a partial exploded view showing the present invention applied to a frame of an electric-assisted bicycle.
FIG. 12 is a partial perspective view showing the present invention applied to a frame of an electric-assisted bicycle.
FIG. 13 is a partial lateral-side cross-sectional view showing the present invention applied to a frame of an electric-assisted bicycle.

### DETAILED DESCRIPTION OF THE PREFERRED EMBODIMENT

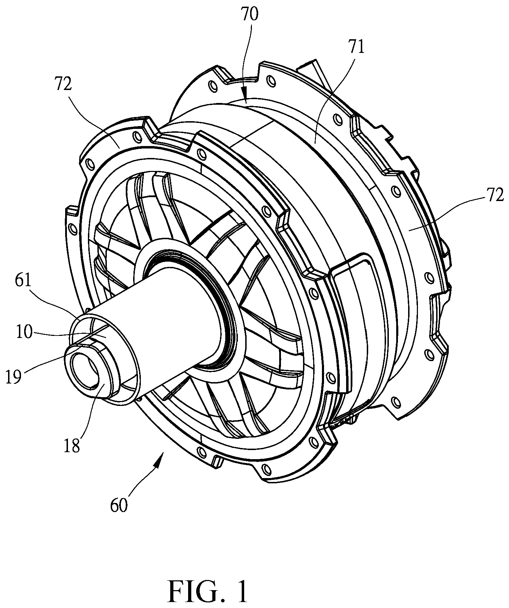

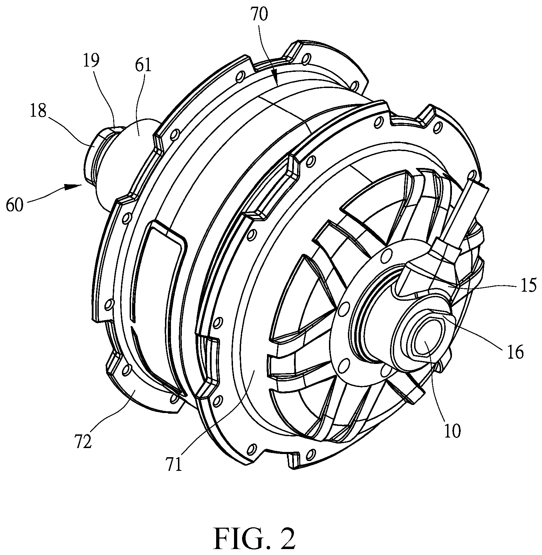

A hub drive structure according to the present invention is used to drive an electric-assisted bicycle or electric vehicle, and as shown in FIGS. 1, 2, and 3, is formed by arranging an electric machine set 20, a gear set 300, an outer rotor input set 60, and a hub 70 on a hub shaft 10.

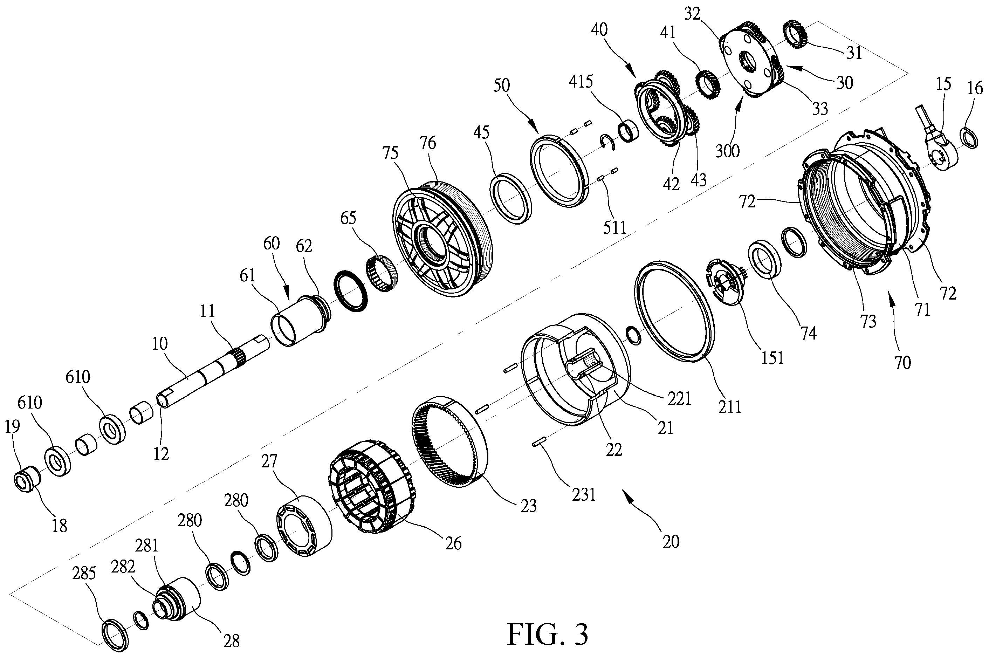

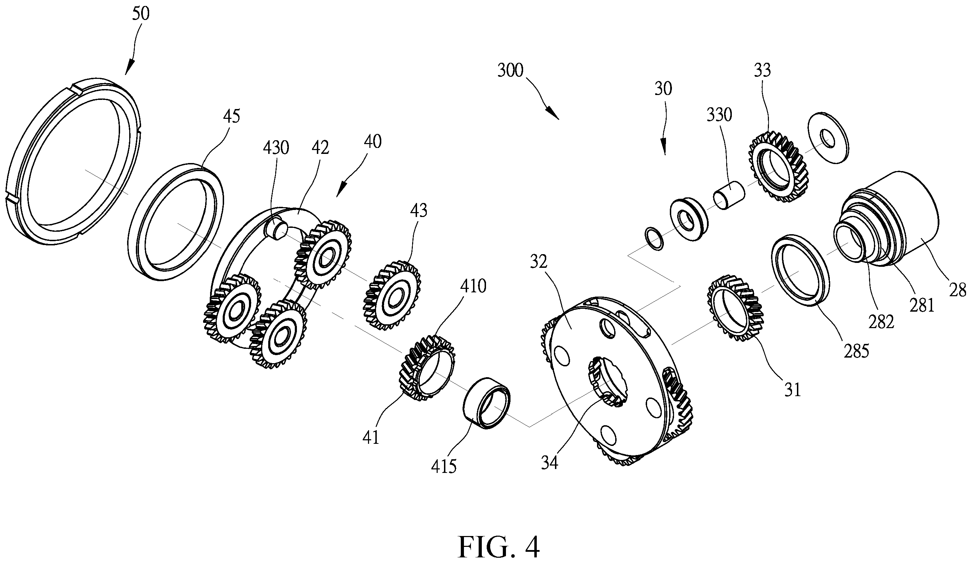

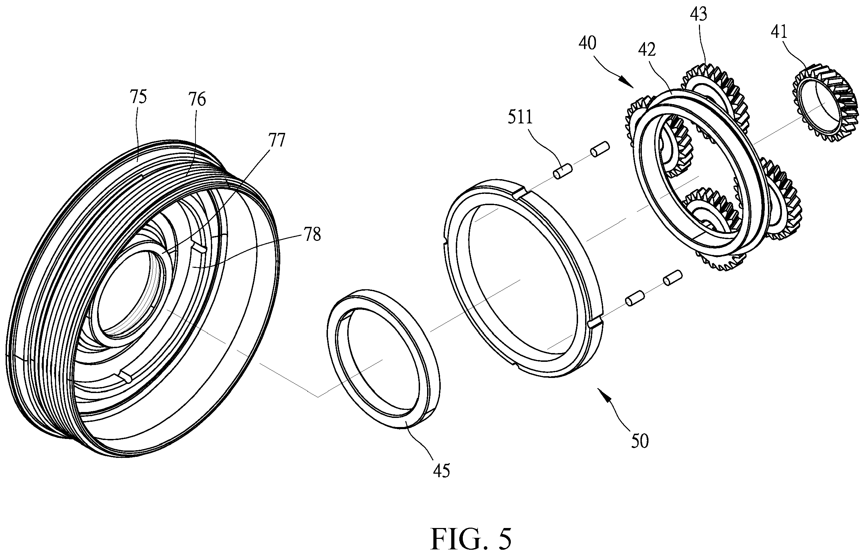

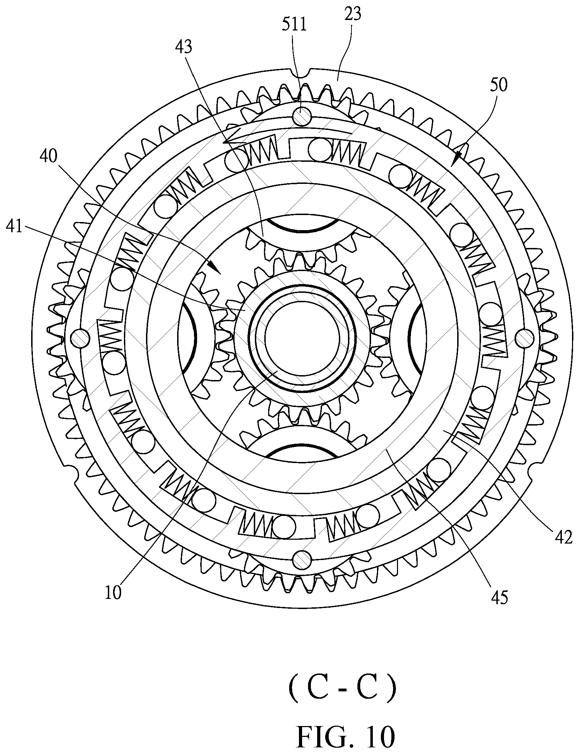

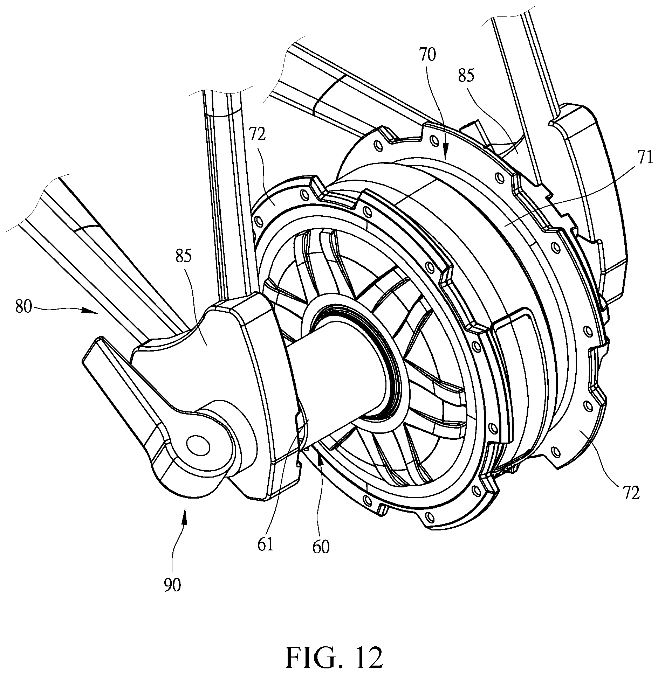

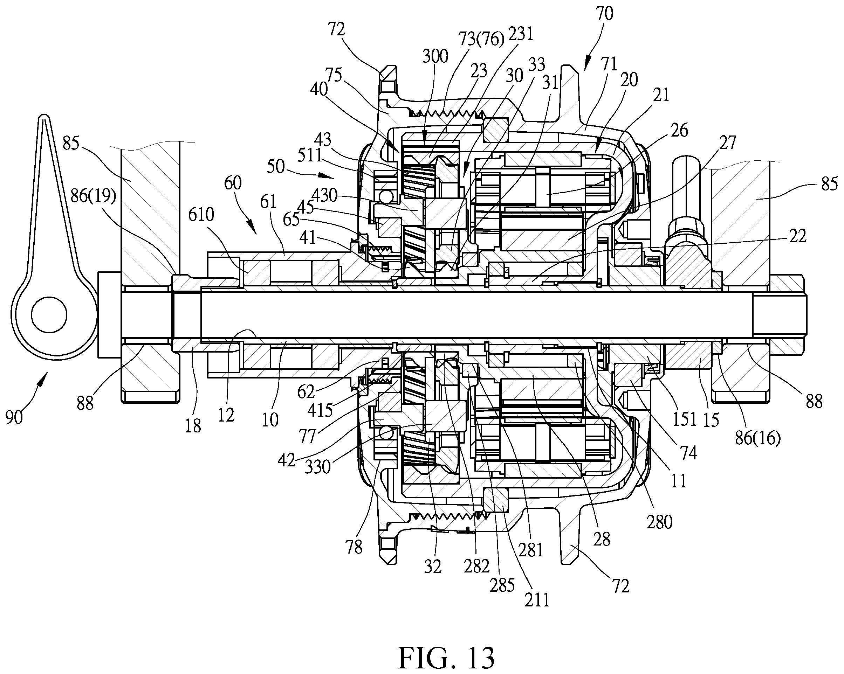

A detailed structure of the hub drive structure according to a preferred embodiment is shown in FIGS. 3, 4, 5, and 6. Two ends of the hub shaft 10 are structured for fixedly mounting on a frame 80 of the electric-assisted bicycle or electric vehicle (see FIGS.10-13) and to receive the electric machine set 20, the gear set 300, the outer rotor input set 60, and the hub 70 to coaxially mount thereon to drive a wheel (not shown in the drawings) mounted on the hub 70. A circumference of the hub shaft 10 is formed with a toothed section 11 that is formed of a plurality of axial toothed ribs to receive the electric machine set 20 to fixedly mount thereto. The hub shaft 10 comprises a center bore 12 that extends axially to combine with a quick-release axle 90 for mounting to the frame 80.

The electric machine set 20 comprises an internal hood 21 in the form of a cup or bowl. The internal hood 21 has a closed end of which an outer circumference is rotatably mounted by means of a first bearing 211 on an internal circumference of the hub 70, and the closed end of the internal hood 21 is formed, in a center thereof, with a shaft tube arm 22 that extends toward an open end. The shaft tube arm 22 is provided, on an internal circumference thereof, with an internal-hole toothed section 221 corresponding to the toothed section 11 of the hub shaft 10, so that the internal hood 21 is set in matting with and thus fixedly mounted by means of the shaft tube arm 22 to the hub shaft 10. Further, an internal circumference of an open end of the internal hood 21 is fixedly mounted with an internal toothed ring 23 by means of a plurality of first key pins 231. The internal toothed ring 23 mates and engages with the gear set 300. Further, the hub shaft 10 is provided with an output sleeve 28 rotatably mounted on the shaft tube arm 22 of the internal hood 21 by means of a plurality of second bearings 280, so that the output sleeve 28 is freely rotatable relative to the shaft tube arm 22. The electric machine set 20 comprises a stator 26 formed of coils and a rotor 27 formed of magnets arranged between the internal circumference of the internal hood 21 and the external circumference of the output sleeve 28, so that after being supplied with electrical power, the stator 26 that is fixed to the internal hood 21 drives, through electromagnetic induction, the rotor 27 to drive the output sleeve 28 to rotate at a high speed. Further, one end of the output sleeve 28 is formed with a shaft seat step 281 and a diameter-reduced wheel seat step 282, wherein the shaft seat step 281 is combined with a third bearing 285 to rotate relative to the gear set 300, and the wheel seat step 282 is provided for assembling with and driving the gear set 300.

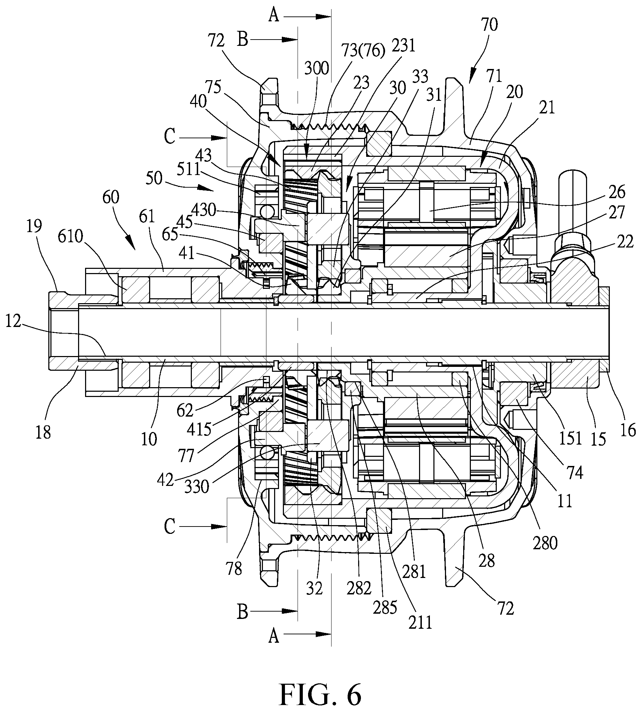

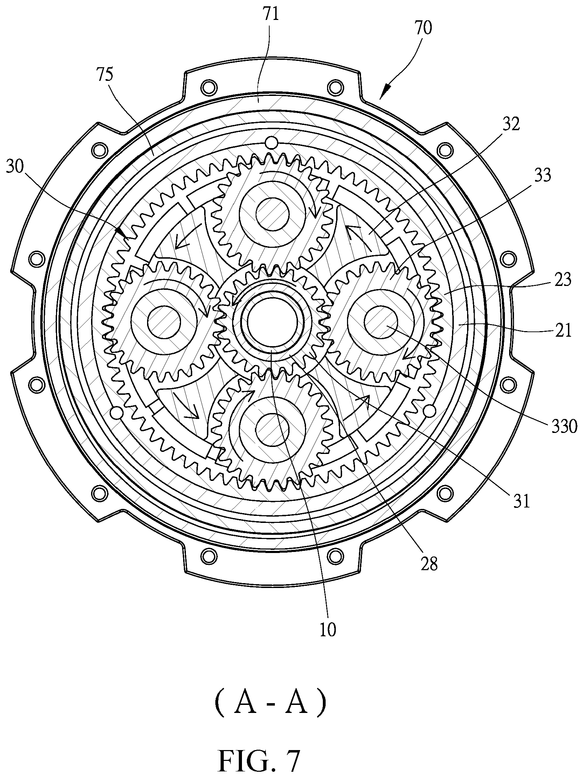

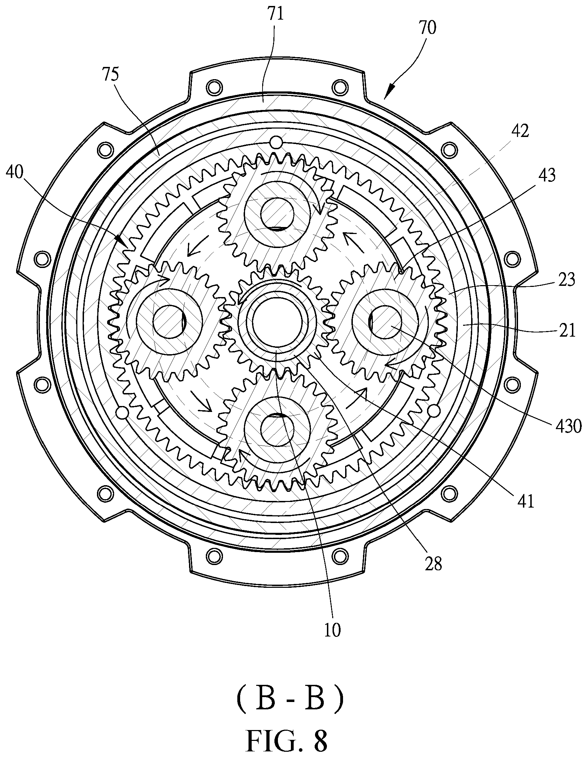

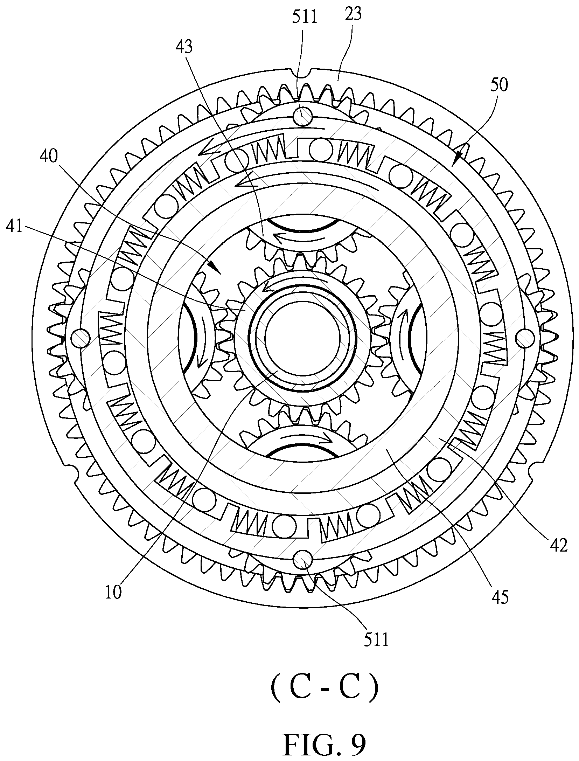

Further, the gear set 300 is arranged at one end of the output sleeve 28 of the electric machine set 20. The gear set 300 comprises a first planetary gear set 30 and a second planetary gear set 40, wherein the first planetary gear set 30 comprises a first sun gear 31 mounted on the wheel seat step 282 of the output sleeve 28. The first sun gear 31 is provided with a plurality of first planet gears 33 surrounding and mating with a circumference thereof (as shown in FIG. 7), and each of the first planet gears 33 is rotatably mounted through a first axle 330 on a first planetary carrier frame 32. Further, each of the first planet gears 33 that is rotatably mounted on the first planetary carrier frame 32 synchronously mates and engages with the internal toothed ring 23 of the internal hood 21 (as shown in FIG. 7), so that the first sun gear 31 drives, through the first planet gears 33, the first planetary carrier frame 32 to rotate. The first planetary carrier frame 32 is mounted on the third bearing 285 of the output sleeve 28, so as to allow the first planetary gear set 30 operate in a manner of being coaxial with the electric machine set 20. Further, a surface of one side of the first planetary carrier frame 32 that is opposite to the electric machine set 20 is formed, in the center thereof, with a mounting toothed hole 34 for mounting the second planetary gear set 40. The second planetary gear set 40 comprises a second sun gear 41 mounted on the first planetary carrier frame 32, wherein the second sun gear 41 comprises a mounting toothed ring 410 corresponding to the mounting toothed hole 34 of the first planetary carrier frame 32. The second sun gear 41 is rotatably mounted by a bearing 415 on the hub shaft 10. The second sun gear 41 is provided with a plurality of second planet gears 43 surrounding and mating with a circumference thereof (as shown in FIG. 8). Each of the second planet gears 43 is rotatably mounted through a second axle 430 on one side of a second planetary carrier frame 42. Further, each of the second planet gears 43 that is rotatably mounted on the second planetary carrier frame 42 synchronously mates and engages with the internal toothed ring 23 of the internal hood 21 (as shown in FIG. 8), so that the second sun gear 41 drives, through the second planet gears 43, the second planetary carrier frame 42 to rotate. The internal circumference of the second planetary carrier frame 42 is mounted through a fourth bearing 45 on the hub 70, so as to further allow the gear set 300 formed of the first planetary gear set 30 and the second planetary gear set 40 to operate in a manner of being coaxial with the electric machine set 20. Further, the external circumference of the second planetary carrier frame 42 is mounted with an inner rotor one-way bearing 50, wherein the external circumference of the inner rotor one-way bearing 50 is fixedly mounted by means of a plurality of second key pins 511 to the internal circumference of the hub 70 (as shown in FIGS. 6 and 9), in order to allow the electric machine set 20 that is arranged inside to drive, in a one way manner after being speed reduced, through the gear set 300, the hub 70 to rotate in an advancing direction of the electric-assisted bicycle, while idling in a reversed direction.

Further, the outer rotor input set 60 comprises an input sleeve 61 rotatably mounted through a plurality of fifth bearings 610 on the hub shaft 10. One end of the input sleeve 61 that corresponds to the hub 70 comprises a raised toothed coupling portion 62 formed of a plurality of axial toothed ribs for engaging with an outer rotor one-way bearing 65 correspondingly assembled and arranged on the hub 70 to allow external man power to drive, in a one way manner, through the input sleeve 61, the hub 70 to rotate toward an advancing direction of the electric-assisted bicycle, while idling in a reversed direction. The end of the hub shaft 10 is fastened with a retaining nut 18 at an outer side of the fifth bearings 610 (as shown in FIG. 6), to fasten and position the outer rotor input set 60 on the hub shaft 10. A second mounting block 19 is formed on an outer side of the retaining nut 18 to mount the hub shaft 10 on the frame 80.

The hub 70 is formed of a first hub casing 71 and a second hub casing 75 that are located on two sides of the hub shaft 10 and combinable with and closable with each other in an opposite manner. The first and second hub casings 71, 75 are respectively provided with locking portions 73, 76 that are combinable with each other. The locking portions 73, 76 can be corresponding internal and external threaded portions or a threaded hole and a bolt for protecting and supporting the electric machine set 20 and the gear set 300. Two sides of an external circumference of at least one of the first and second hub casings 71, 75 are provided with spoke mounting portions 72 for mounting bicycle rim spokes. The center of the first hub casing 71 is rotatably mounted through a sixth bearing 74 on a coupling device 151 fixedly mounted to the hub shaft 10 to allow the first hub casing 71 to rotate relative to the hub shaft 10. The end of the hub shaft 10 is provided with an electric connector 15 connected to the coupling device 151, and an end face of the electric connector 15 that faces outwards is provided with a first mounting block 16 for assembling with and mounting to the frame 80. The electric connector 15 functions to supply electrical power to the electric machine set 20 inside the hub 70. The internal circumference of the second hub casing 75 is provided with a bearing mounting portion 78 corresponding to the inner rotor one-way bearing 50 of the gear set 300. The second hub casing 75 is provided, on the center thereof, with a central projection 77 that receives the fourth bearing 45 of the gear set 300 to mount on an external circumference thereof. The internal circumference of the central projection 77 receives the outer rotor one-way bearing 65 of the outer rotor input set 60 to fasten thereto.

As such, a hub drive structure that provides an initial supporting force for driving and has high concentricity is formed.

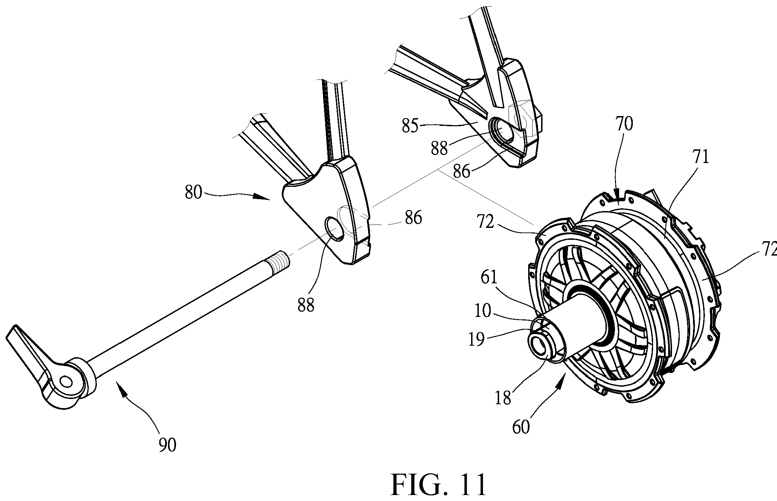

A practical operation of the present invention the hub drive structure is illustrated in FIGS. 11-13. The hub shaft 10 is mounted through a quick-release axle 90 between two wheel bifurcation bars 85 of the frame 80 of the electric-assisted bicycle or the electric vehicle, and the electric connector 15 of the hub shaft 10 is connectable to a controller (not shown in the drawings). The outer rotor input set 60 of the hub shaft 10 receives a sprocket wheel (not shown in the drawings to mount thereto. The bifurcation bars 85 on the two sides of the frame 80 having opposite surfaces that are each formed with a mounting trough 86 having an opening facing outwards. The mounting troughs 86 on the two sides are formed with through holes 88 corresponding to each other, so that the hub drive structure may be arranged to have the first and second mounting blocks 16, 19 at the outer side of the electric connector 15 and provided on the retaining nut 18, which are respectively at the two ends of the hub shaft 10, respectively inserted into the opposite mounting troughs 86 of the bifurcation bars 85 on two sides of the frame 80, in combination with the quick-release axle 90 penetrating through the through hole 88 of the bifurcation bar 85 of one side, the center bore 12 of the hub shaft 10, and the through hole 88 of the bifurcation bars 85 of another side, to thereby have the hub drive structure quickly and securely mounted between the bifurcation bars 85 of two sides of the frame 80.

To operate, when it needs to drive the bicycle with electric assisting, as shown in FIGS. 6-10, electrical power is supplied to the electric machine set 20, so that the stator 26 of the electric machine set 20 that is fixed to the internal hood 21 generates magnetic induction on the rotor 27 that is mounted on the output sleeve 28 to have the rotor 27 of the electric machine set 20 driving the output sleeve 28 to rotate at a high speed, and as shown in FIG. 7, the output sleeve 28 drives the first sun gear 31 of the first planetary gear set 30 of the gear set 300 to rotate counterclockwise in the advancing direction of the electric-assisted bicycle to thereby drive the first planet gears 33 of the first planetary gear set 30 to rotate clockwise. As the first planet gears 33 synchronously mate with the internal circumference of the internal toothed ring 23 that is mounted to the internal hood 21, the first planetary carrier frame 32 is caused to rotate counterclockwise in a speed reduced manner as being operated by means of the gear ratio between the first sun gear 31 and the first planet gears 33.

Next, as shown in FIG. 8, as the second sun gear 41 of the second planetary gear set 40 is fixed on the first planetary carrier frame 32, the second sun gear 41 is caused to synchronously rotate counterclockwise to thereby drive the second planet gears 43 of the second planetary gear set 40 to rotate clockwise. As the second planet gears 43 synchronously mate with the internal circumference of the internal toothed ring 23 of the internal hood 21, the second planetary carrier frame 42 is caused to rotate clockwise in a speed reduced manner as being operated by means of the gear ratio between the second sun gear 41 and the second planet gears 43, and further, as shown in FIG. 9, driving the inner rotor one-way bearing 50 mounted on the second planetary carrier frame 42 to drive the second hub casing 75 of the hub 70 to have the hub 70 rotating counterclockwise to achieve the purpose of driving the electric-assisted bicycle to advance forward., and further, under this condition, the outer rotor one-way bearing 65 between the second hub casing 75 and the input sleeve 61 is in an idling state, preventing man power and the transmission power of the electric machine set 20 from interfering with each other.

Further, when it needs to drive the electric-assisted bicycle with man power, this can be done by directly stepping the crank to make the chain drive the sprocket wheel (not shown in the drawings) mounted on the input sleeve 61 of the outer rotor input set 60. The input sleeve 61 drives, through the outer rotor one-way bearing 65, the second hub casing 75 to rotate in the advancing direction of the electric-assisted bicycle, making the hub 70 rotating to advance thereby achieving the purpose of man power driving the electric-assisted bicycle to advance, and further, under this condition, the inner rotor one-way bearing 50 between the second hub casing 75 and the second planetary carrier frame 42 of the second planetary gear set 40 is in an idling state (as shown in FIG. 10) to prevent the transmission power of the electric machine set 20 and the man power from interfering with each other.

Through the previous design and description, in the present invention, the internal hood 21 of the electric machine set 20 of the hub drive structure is fixed by means of the shaft tube arm 22 to the hub shaft 10, so that when the motor is supplied with electrical power to cause the rotor 27 to drive the hub 70, a firm and sound supporting force may be obtained to effectively increase the initial driving force of the hub so as to reduce unnecessary kinetic loss, and further, the second planetary gear set 40 and the first planetary gear set 30 are arranged in a coaxial manner and the rotor 27 of the electric machine set 20 and the first planetary gear set 30 of the gear set 300 are mounted on the output sleeve 28 in a coaxial manner, and the output sleeve 28 and the hub 70 are freely and coaxially rotatable relative to the internal hood 21, so as to effectively ensure concentricity to thereby improve operation stability and reduce phenomenon of jitter noise, and to further reduce the volume of the hub by means of the gear set 300.

## Claims

1. A hub drive structure, comprising:
a hub shaft (10);
a hub (70), which is formed of a first hub casing (71) and a second hub casing (75) that are combinable in an opposite manner to each other and are respectively arranged at two ends of the hub shaft (10);
an electric machine set (20), which comprises an internal hood (21), an external circumference of one side of the internal hood (21) being rotatably mounted on an internal circumference of the first hub casing (71) of the hub (70), the internal hood (21) being provided, on a center thereof, with a shaft tube arm (22) fixedly mounted to the hub shaft (10), an internal toothed ring (23) being fixedly mounted on an internal circumference of the internal hood (21), the electric machine set (20) comprising an output sleeve (28) rotatably mounted on the shaft tube arm (22) of the internal hood (21), the electric machine set (20) comprising a stator (26) and a rotor (27), which are opposite to each other, respectively set on the internal circumference of the internal hood (21) and an external circumference of the output sleeve (28), one end of the output sleeve (28) being formed with a shaft seat step (281) and a wheel seat step (282), wherein the shaft seat step (281) receives a gear set (300) to mount thereto through a third bearing (285) and the wheel seat step (282) is provided for fixing and driving the gear set (300);
the gear set (300), which is mounted on the output sleeve (28) of the electric machine set (20), the gear set (300) comprising at least one planetary gear set (30, 40) having an external circumference synchronously mating the internal toothed ring (23) of the internal hood (21), so that the gear set (300) provides a predetermined reduction ratio, one side of the gear set (300) corresponding to and supported on the third bearing (285) of the output sleeve (28) so as to allow the gear set (300) and the electric machine set (20) to operate in a coaxial manner, the gear set (300) being mounted by means of an inner rotor one-way bearing (50) to an internal circumference of the second hub casing (75) of the hub (70) to allow the electric machine set (20) to drive, after speed reduction through the gear set (300), in a one way manner, the hub (70) to rotate in an advancing direction; and
an outer rotor input set (60), which comprises an input sleeve (61), the input sleeve (61) being rotatably mounted on the hub shaft (10) at an outer side of the hub (70), the input sleeve (61) being correspondingly assembled, by means of an outer rotor one-way bearing (65), on the hub (70), so that the input sleeve (61) is drivable by external man power to drive, in a one way manner, the hub (70) to rotate in the advancing direction.

2. The hub drive structure according to claim 1, wherein a circumference of the hub shaft (10) is formed with a toothed section (11) formed of a plurality of axial toothed ribs, an internal circumference of the shaft tube arm (22) being formed with an internal-hole toothed section (221) corresponding to the toothed section (11), so that the internal hood (21) is set in engagement with and fixed to the hub shaft (10) by means of the shaft tube arm (22).

3. The hub drive structure according to claim 1, wherein a first bearing (211) is arranged between the internal hood (21) and an internal circumference of the first hub casing (71) of the hub (70), the hub shaft (10) using a plurality of second bearings (280) on the shaft tube arm (22) of the internal hood (21) to rotatably support the output sleeve (28), so as to allow the output sleeve (28) and the hub (70) to concentrically and freely rotate relative to the internal hood (21).

4. The hub drive structure according to claim 1, wherein the first and second hub casings (71, 75) of the hub (70) comprises locking portions (73) combinable with each other, two sides of an external circumference of at least one of the first and second hub casings (71, 75) being provided with spoke mounting portions (72) for mounting bicycle rim spokes.

5. The hub drive structure according to claim 4, wherein an internal circumference of the second hub casing (75) of the hub (70) comprises a bearing mounting portion (78) corresponding to the inner rotor one-way bearing (50), the second hub casing (75) being provided, at a center thereof, with a central projection (77) having an external circumference on which the gear set (300) arranged inside is mounted, an internal circumference of the central projection (77) receiving an outer rotor one-way bearing (65) of the outer rotor input set (60) to fasten thereto.

6. The hub drive structure according to claim 1, wherein one end of the input sleeve (61) of the outer rotor input set (60) corresponding to the hub (70) is formed with a raised toothed coupling portion (62) that is formed of a plurality of axial toothed ribs for correspondingly mating by the outer rotor one-way bearing (65).

7. The hub drive structure according to claim 1, wherein the gear set (300) comprises a first planetary gear set (30) and a second planetary gear set (40), the first planetary gear set (30) comprising a first sun gear (31) mounted on the wheel seat step (282) of the output sleeve (28), a circumference of the first sun gear (31) being surrounded by and mating with a plurality of first planet gears (33), each of the first planet gears (33) being rotatably mounted on a first planetary carrier frame (32), each of the first planet gears (33) rotatably mounted on the first planetary carrier frame (32) synchronously mating with the internal toothed ring (23), the second planetary gear set (40) comprising a second sun gear (41) mounted on the first planetary carrier frame (32), the second sun gear (41) being rotatably mounted through a bearing (415) on the hub shaft (10), a circumference of the second sun gear (41) being surrounded by and mating with a plurality of second planet gears (43), each of the second planet gears (43) being rotatably mounted on one side of a second planetary carrier frame (42), each of the second planet gears (43) rotatably mounted on the second planetary carrier frame (42) synchronously mating with the internal toothed ring (23).

8. The hub drive structure according to claim 7, wherein an internal circumference of the second planetary carrier frame (42) is rotatably mounted through a fourth bearing (45) on the hub (70), so that the gear set (300) is operable by the electric machine set (20) to rotate in a coaxial manner in the hub (70).

9. The hub drive structure according to claim 7, wherein a surface of one side of the first planetary carrier frame (32) of the first planetary gear set (30) that corresponds to the second planetary gear set (40) is formed, in a center thereof, with a mounting toothed hole (34), and the second sun gear (41) of the second planetary gear set (40) comprises a mounting toothed ring (410) corresponding to the mounting toothed hole (34).

10. The hub drive structure according to any one claims 1-9, wherein the hub drive structure is mounted on a frame (80), the hub shaft (10) comprising a center bore (12) extending in an axial line, one end of the hub shaft (10) being provided with an electric connector (15) for supplying electrical power to the electric machine set (20) and a first mounting block (16), an opposite end of the hub shaft (10) being fastened with a retaining nut (18) that retains the outer rotor input set (60), a second mounting block (19) being formed on an outer side of the retaining nut (18), the frame (80) comprising two bifurcation bars (85) that are opposite to each other, opposite surfaces of the bifurcation bars (85) each forming a mounting trough (86) having an opening facing outwards, the mounting troughs (86) on the two sides being each formed with a corresponding through hole (88), so that the hub drive structure is arranged to have the first and second mounting blocks (16, 19) on the two ends of the hub shaft (10) to fit into the two opposite mounting troughs (86), in combination with a quick-release axle (90) penetrating through the center bore (12) of the hub shaft (10) so as to achieve fixedly mounting between the bifurcation bars (85) on the two sides of the frame (80).

11. The hub drive structure according to claim 10, wherein the electric connector (15) and the first mounting block (16) are arranged as a combination for being commonly fastened to the hub shaft (10), and the retaining nut (18) and the second mounting block (19) are two separate partes individually fastened to the hub shaft (10).

## Patentansprüche

1. Nabenantriebsstruktur, die Folgendes umfasst:
eine Nabenwelle (10);
eine Nabe (70), die aus einem ersten Nabengehäuse (71) und einem zweiten Nabengehäuse (75) gebildet ist, die entgegengesetzt zueinander kombinierbar sind und jeweils an zwei Enden der Nabenwelle (10) angeordnet sind;
einen elektrischen Maschinensatz (20), der eine innere Haube (21) umfasst, wobei ein Außenumfang einer Seite der inneren Haube (21) drehbar an einem Innenumfang des ersten Nabengehäuses (71) der Nabe (70) montiert ist, die innere Haube (21) in ihrer Mitte mit einem Wellenrohrarm (22) versehen ist, der fest an der Nabenwelle (10) montiert ist, ein innerer Zahnring (23) fest an einem Innenumfang der inneren Haube (21) montiert ist, der elektrische Maschinensatz (20) eine Ausgangshülse (28) umfasst, die drehbar an dem Wellenrohrarm (22) der inneren Haube (21) montiert ist, der elektrische Maschinensatz (20) einen Stator (26) und einen Rotor (27) umfasst, die einander gegenüberliegen und jeweils an dem Innenumfang der inneren Haube (21) und einem Außenumfang der Ausgangshülse (28) angeordnet sind, ein Ende der Ausgangshülse (28) mit einer Wellensitzstufe (281) und einer Radsitzstufe (282) ausgebildet ist, wobei die Wellensitzstufe (281) einen Zahnradsatz (300) aufnimmt, um ihn durch ein drittes Lager (285) daran zu montieren, und die Radsitzstufe (282) zum Befestigen und Antreiben des Zahnradsatzes (300) vorgesehen ist;
den Zahnradsatz (300), der an der Ausgangshülse (28) des elektrischen Maschinensatzes (20) montiert ist, wobei der Zahnradsatz (300) mindestens einen Planetengetriebesatz (30, 40) umfasst, der einen Außenumfang aufweist, der dem inneren Zahnring (23) der inneren Haube (21) synchron angepasst ist, so dass der Zahnradsatz (300) ein vorbestimmtes Untersetzungsverhältnis bereitstellt, wobei eine Seite des Zahnradsatzes (300) dem dritten Lager (285) der Ausgangshülse (28) entspricht und von diesem gestützt wird, so dass dem Zahnradsatz (300) und dem elektrischen Maschinensatz (20) ermöglicht wird, koaxial zu arbeiten, wobei der Zahnradsatz (300) durch ein Innenrotor-Einweglager (50) an einem Innenumfang des zweiten Nabengehäuses (75) der Nabe (70) montiert ist, um dem elektrischen Maschinensatz (20) zu ermöglichen, die Nabe (70) nach der Geschwindigkeitsreduzierung durch den Zahnradsatz (300) einseitig anzutreiben, sich in Vorwärtsrichtung zu drehen; und
einen Außenrotor-Eingangssatz (60), der eine Eingangshülse (61) umfasst, wobei die Eingangshülse (61) drehbar an der Nabenwelle (10) an einer Außenseite der Nabe (70) montiert ist, wobei die Eingangshülse (61) durch ein Außenrotor-Einweglager (65) entsprechend an der Nabe (70) montiert ist, so dass die Eingangshülse (61) durch äußere Arbeitskraft angetrieben werden kann, um die Nabe (70) einseitig anzutreiben, sich in Vorwärtsrichtung zu drehen.

2. Nabenantriebsstruktur nach Anspruch 1, wobei ein Umfang der Nabenwelle (10) mit einem gezahnten Abschnitt (11) ausgebildet ist, der aus einer Vielzahl von axialen gezahnten Rippen gebildet ist, wobei ein Innenumfang des Wellenrohrarms (22) mit einem gezahnten Innenloch-Abschnitt (221) ausgebildet ist, der dem gezahnten Abschnitt (11) entspricht, so dass die innere Haube (21) durch den Wellenrohrarm (22) mit der Nabenwelle (10) in Eingriff gebracht und an dieser befestigt wird.

3. Nabenantriebsstruktur nach Anspruch 1, wobei ein erstes Lager (211) zwischen der inneren Haube (21) und einem Innenumfang des ersten Nabengehäuses (71) der Nabe (70) angeordnet ist, wobei die Nabenwelle (10) eine Vielzahl von zweiten Lagern (280) an dem Wellenrohrarm (22) der inneren Haube (21) verwendet, um die Ausgangshülse (28) drehbar zu stützen, so dass der Ausgangshülse (28) und der Nabe (70) ermöglicht wird, sich konzentrisch und frei relativ zu der inneren Haube (21) zu drehen.

4. Nabenantriebsstruktur nach Anspruch 1, wobei das erste und zweite Nabengehäuse (71, 75) der Nabe (70) miteinander kombinierbare Verriegelungsteile (73) umfassen, wobei zwei Seiten eines Außenumfangs des ersten und/oder des zweiten Nabengehäuses (71, 75) mit Speichenbefestigungsteilen (72) zur Montage von Fahrradfelgenspeichen versehen sind.

5. Nabenantriebsstruktur nach Anspruch 4, wobei ein Innenumfang des zweiten Nabengehäuses (75) der Nabe (70) einen Lagerbefestigungsteil (78) umfasst, der dem Innenrotor-Einweglager (50) entspricht, wobei das zweite Nabengehäuse (75) an seiner Mitte mit einem zentralen Vorsprung (77) versehen ist, der einen Außenumfang aufweist, an dem der innen angeordnete Zahnradsatz (300) montiert ist, wobei ein Innenumfang des zentralen Vorsprungs (77) ein Außenrotor-Einweglager (65) des Außenrotor-Eingangssatzes (60) aufnimmt, um es daran zu befestigen.

6. Nabenantriebsstruktur nach Anspruch 1, wobei ein Ende der Eingangshülse (61) des Außenrotor-Eingangssatzes (60), das der Nabe (70) entspricht, mit einem erhöhten gezahnten Kupplungsteil (62) ausgebildet ist, der aus einer Vielzahl von axialen gezahnten Rippen zum entsprechenden Anpassen durch das Außenrotor-Einweglager (65) gebildet ist.

7. Nabenantriebsstruktur nach Anspruch 1, wobei der Zahnradsatz (300) einen ersten Planetengetriebesatz (30) und einen zweiten Planetengetriebesatz (40) umfasst, wobei der erste Planetengetriebesatz (30) ein erstes Sonnenrad (31) umfasst, das an der Radsitzstufe (282) der Ausgangshülse (28) montiert ist, wobei ein Umfang des ersten Sonnenrads (31) von einer Vielzahl von ersten Planetenrädern (33) umschlossen und diesen angepasst ist, wobei jedes der ersten Planetenräder (33) drehbar an einem ersten Planetenträgerrahmen (32) montiert ist, wobei jedes der ersten Planetenräder (33) drehbar an dem ersten Planetenträgerrahmen (32) montiert ist und synchron dem inneren Zahnring (23) angepasst ist, wobei der zweite Planetengetriebesatz (40) ein zweites Sonnenrad (41) umfasst, das an dem ersten Planetenträgerrahmen (32) montiert ist, wobei das zweite Sonnenrad (41) drehbar durch ein Lager (415) an der Nabenwelle (10) montiert ist, wobei ein Umfang des zweiten Sonnenrads (41) von einer Vielzahl von zweiten Planetenrädern (43) umgeben ist und diesen angepasst ist, wobei jedes der zweiten Planetenräder (43) drehbar an einer Seite eines zweiten Planetenträgerrahmens (42) montiert ist, wobei jedes der zweiten Planetenräder (43) drehbar an dem zweiten Planetenträgerrahmen (42) montiert ist, der synchron dem inneren Zahnring (23) angepasst ist.

8. Nabenantriebsstruktur nach Anspruch 7, wobei ein Innenumfang des zweiten Planetenträgerrahmens (42) durch ein viertes Lager (45) drehbar an der Nabe (70) montiert ist, so dass der Zahnradsatz (300) durch den elektrischen Maschinensatz (20) betrieben werden kann, um sich koaxial in der Nabe (70) zu drehen.

9. Nabenantriebsstruktur nach Anspruch 7, wobei eine Oberfläche einer Seite des ersten Planetenträgerrahmens (32) des ersten Planetengetriebesatzes (30), der dem zweiten Planetengetriebesatz (40) entspricht, in seiner Mitte mit einem gezahnten Montageloch (34) ausgebildet ist und das zweite Sonnenrad (41) des zweiten Planetengetriebesatzes (40) einen gezahnten Montagering (410) umfasst, der dem gezahnten Montageloch (34) entspricht.

10. Nabenantriebsstruktur nach einem der Ansprüche 1-9, wobei die Nabenantriebsstruktur an einem Rahmen (80) montiert ist, die Nabenwelle (10) eine Mittelbohrung (12) umfasst, die sich in einer axialen Linie erstreckt, ein Ende der Nabenwelle (10) mit einem elektrischen Verbinder (15) zum Zuführen elektrischer Energie an den elektrischen Maschinensatz (20) und einen ersten Montageblock (16) versehen ist, ein gegenüberliegendes Ende der Nabenwelle (10) mit einer Haltemutter (18) befestigt ist, die den Außenrotor-Eingangssatz (60) hält, ein zweiter Montageblock (19) an einer Außenseite der Haltemutter (18) ausgebildet ist, der Rahmen (80) zwei einander gegenüberliegende Gabelstangen (85) umfasst, gegenüberliegende Oberflächen der Gabelstangen (85) jeweils eine Montagewanne (86) mit einer nach außen gerichteten Öffnung bilden, die Montagewannen (86) auf den beiden Seiten jeweils mit einem entsprechenden Durchgangsloch (88) ausgebildet sind, so dass die Nabenantriebsstruktur so angeordnet ist, dass der erste und zweite Montageblock (16, 19) an den beiden Enden der Nabenwelle (10) in die beiden gegenüberliegenden Montagewannen (86) passen, in Kombination mit einer Schnellspannachse (90), die durch die Mittelbohrung (12) der Nabenwelle (10) dringt, um eine feste Montage zwischen den Gabelstangen (85) auf den beiden Seiten des Rahmens (80) zu erreichen.

11. Nabenantriebsstruktur nach Anspruch 10, wobei der elektrische Verbinder (15) und der erste Montageblock (16) als Kombination angeordnet sind, um gemeinsam an der Nabenwelle (10) befestigt zu sein, und die Haltemutter (18) und der zweite Montageblock (19) zwei separate Teile sind, die einzeln an der Nabenwelle (10) befestigt sind.

## Revendications

1. Structure d'entraînement de moyeu, comprenant :
un arbre de moyeu (10) ;
un moyeu (70), qui est formé d'un premier boîtier de moyeu (71) et d'un deuxième boîtier de moyeu (75) qui peuvent être combinés de manière opposée l'un par rapport à l'autre et qui sont respectivement disposés aux deux extrémités de l'arbre de moyeu (10) ;
un ensemble de machine électrique (20), qui comprend un capot interne (21), une circonférence externe d'un côté du capot interne (21) étant montée de manière rotative sur une circonférence interne du premier boîtier de moyeu (71) du moyeu (70), le capot interne (21) étant muni, en son centre, d'un bras de tube d'arbre (22) monté de manière fixe sur l'arbre de moyeu (10), une couronne dentée interne (23) étant montée de manière fixe sur une circonférence interne du capot interne (21), l'ensemble de machine électrique (20) comprenant un manchon de sortie (28) monté de manière rotative sur le bras de tube d'arbre (22) du capot interne (21), l'ensemble de machine électrique (20) comprenant un stator (26) et un rotor (27), qui sont opposés l'un à l'autre, respectivement installés sur la circonférence interne du capot interne (21) et une circonférence externe du manchon de sortie (28), une extrémité du manchon de sortie (28) étant formée avec un épaulement de portée d'arbre (281) et un épaulement de portée de roue (282), où l'épaulement de portée d'arbre (281) reçoit un ensemble d'engrenages (300) à monter sur celui-ci par l'intermédiaire d'un troisième roulement (285) et l'épaulement de portée de roue (282) est prévu pour fixer et entraîner l'ensemble d'engrenages (300) ;
l'ensemble d'engrenages (300), qui est monté sur le manchon de sortie (28) de l'ensemble de machine électrique (20), l'ensemble d'engrenages (300) comprenant au moins un ensemble d'engrenages planétaires (30, 40) ayant une circonférence externe s'accouplant de manière synchrone avec la couronne dentée interne (23) du capot interne (21), de sorte que l'ensemble d'engrenages (300) fournisse un rapport de réduction prédéterminé, un côté de l'ensemble d'engrenages (300) correspondant au troisième roulement (285) du manchon de sortie (28) et s'appuyant sur celui-ci afin de permettre à l'ensemble d'engrenages (300) et à l'ensemble de machine électrique (20) de fonctionner de manière coaxiale, l'ensemble d'engrenages (300) étant monté au moyen d'un roulement unidirectionnel de rotor interne (50) sur une circonférence interne du deuxième boîtier de moyeu (75) du moyeu (70) pour permettre à l'ensemble de machine électrique (20) d'entraîner, après réduction de vitesse par l'intermédiaire de l'ensemble d'engrenages (300), de manière unidirectionnelle, le moyeu (70) en rotation dans le sens de progression ; et
un ensemble d'entrée à rotor externe (60), qui comprend un manchon d'entrée (61), le manchon d'entrée (61) étant monté de manière rotative sur l'arbre de moyeu (10) sur un côté externe du moyeu (70), le manchon d'entrée (61) étant assemblé de manière correspondante, au moyen d'un roulement unidirectionnel de rotor externe (65), sur le moyeu (70), de sorte que le manchon d'entrée (61) peut être entraîné par une force humaine externe pour entraîner, de manière unidirectionnelle, le moyeu (70) en rotation dans le sens de progression.

2. Structure d'entraînement de moyeu selon la revendication 1, où une circonférence de l'arbre de moyeu (10) est formée avec une section dentée (11) formée d'une pluralité de nervures dentées axiales, une circonférence interne du bras de tube d'arbre (22) étant formée avec une section dentée à trou interne (221) correspondant à la section dentée (11), de sorte que le capot interne (21) est mis en prise avec l'arbre de moyeu (10) et fixé à celui-ci au moyen du bras de tube d'arbre (22).

3. Structure d'entraînement de moyeu selon la revendication 1, où un premier roulement (211) est disposé entre le capot interne (21) et une circonférence interne du premier boîtier de moyeu (71) du moyeu (70), l'arbre de moyeu (10) utilisant une pluralité de deuxièmes roulements (280) sur le bras de tube d'arbre (22) du capot interne (21) pour supporter de manière rotative le manchon de sortie (28), afin de permettre au manchon de sortie (28) et au moyeu (70) de tourner concentriquement et librement par rapport au capot interne (21).

4. Structure d'entraînement de moyeu selon la revendication 1, où le premier et le deuxième boîtier de moyeu (71, 75) du moyeu (70) comprennent des parties de verrouillage (73) pouvant être combinées entre elles, les deux côtés d'une circonférence externe d'au moins l'un parmi le premier et le deuxième boîtier de moyeu (71, 75) étant pourvus de parties de montage de rayons (72) pour monter des rayons de jante de bicyclette.

5. Structure d'entraînement de moyeu selon la revendication 4, où une circonférence interne du deuxième boîtier de moyeu (75) du moyeu (70) comprend une partie de montage de roulement (78) correspondant au roulement unidirectionnel de rotor interne (50), le deuxième boîtier de moyeu (75) étant muni, en son centre, d'une saillie centrale (77) ayant une circonférence externe sur laquelle est monté l'ensemble d'engrenages (300) disposé à l'intérieur, une circonférence interne de la saillie centrale (77) recevant un roulement unidirectionnel de rotor externe (65) de l'ensemble d'entrée de rotor externe (60) pour le fixer à celui-ci.

6. Structure d'entraînement de moyeu selon la revendication 1, où une extrémité du manchon d'entrée (61) de l'ensemble d'entrée de rotor externe (60) correspondant au moyeu (70) est formée avec une partie de couplage dentée surélevée (62) qui est formée d'une pluralité de nervures dentées axiales pour s'accoupler de manière correspondante avec le roulement unidirectionnel de rotor externe (65).

7. Structure d'entraînement de moyeu selon la revendication 1, où l'ensemble d'engrenages (300) comprend un premier ensemble d'engrenages planétaires (30) et un deuxième ensemble d'engrenages planétaires (40), le premier ensemble d'engrenages planétaires (30) comprenant un premier engrenage solaire (31) monté sur l'épaulement de siège de roue (282) du manchon de sortie (28), une circonférence du premier engrenage solaire (31) étant entourée par et s'accouplant avec une pluralité de premiers engrenages planétaires (33), chacun des premiers engrenages planétaires (33) étant monté de manière rotative sur un premier cadre porte-satellites (32), chacun des premiers engrenages planétaires (33) montés de manière rotative sur le premier cadre porte-satellites (32) s'accouplant de manière synchrone avec la couronne dentée interne (23), le deuxième ensemble d'engrenages planétaires (40) comprenant un deuxième engrenage solaire (41) monté sur le premier cadre porte-satellites (32), le deuxième engrenage solaire (41) étant monté de manière rotative par l'intermédiaire d'un roulement (415) sur l'arbre de moyeu (10), une circonférence du deuxième engrenage solaire (41) étant entourée par et s'accouplant avec une pluralité de deuxièmes engrenages planétaires (43), chacun des deuxièmes engrenages planétaires (43) étant monté de manière rotative sur un côté d'un deuxième cadre porte-satellites (42), chacun des deuxièmes engrenages planétaires (43) monté de manière rotative sur le deuxième cadre porte-satellites (42) s'accouplant de manière synchrone avec la couronne dentée interne (23).

8. Structure d'entraînement de moyeu selon la revendication 7, où une circonférence interne du deuxième cadre porte-satellites (42) est montée de manière rotative par l'intermédiaire d'un quatrième roulement (45) sur le moyeu (70), de sorte que l'ensemble d'engrenages (300) peut être actionné par l'ensemble de machine électrique (20) pour tourner de manière coaxiale dans le moyeu (70).

9. Structure d'entraînement de moyeu selon la revendication 7, où une surface d'un côté du premier cadre porte-satellites (32) du premier ensemble d'engrenages planétaires (30) qui correspond au deuxième ensemble d'engrenages planétaires (40) est formée, en son centre, avec un trou denté de montage (34), et le deuxième engrenage solaire (41) du deuxième ensemble d'engrenages planétaires (40) comprend une couronne dentée de montage (410) correspondant au trou denté de montage (34).

10. Structure d'entraînement de moyeu selon l'une quelconque des revendications 1 à 9, où la structure d'entraînement de moyeu est montée sur un cadre (80), l'arbre de moyeu (10) comprenant un alésage central (12) s'étendant dans une ligne axiale, une extrémité de l'arbre de moyeu (10) étant pourvue d'un connecteur électrique (15) pour alimenter en énergie électrique l'ensemble de machine électrique (20) et d'un premier bloc de montage (16), une extrémité opposée de l'arbre de moyeu (10) étant fixée avec un écrou de retenue (18) qui retient l'ensemble d'entrée de rotor externe (60), un deuxième bloc de montage (19) étant formé sur un côté externe de l'écrou de retenue (18), le cadre (80) comprenant deux barres de bifurcation (85) qui sont opposées l'une à l'autre, les surfaces opposées des barres de bifurcation (85) formant chacune une goulotte de montage (86) ayant une ouverture tournée vers l'extérieur, les goulottes de montage (86) sur les deux côtés étant chacune formées avec un trou traversant correspondant (88), de sorte que la structure d'entraînement de moyeu est agencée pour avoir le premier et le deuxième bloc de montage (16, 19) aux deux extrémités de l'arbre de moyeu (10) pour s'ajuster dans les deux goulottes de montage opposées (86), en combinaison avec un axe à dégagement rapide (90) pénétrant à travers l'alésage central (12) de l'arbre de moyeu (10) de manière à réaliser un montage fixe entre les barres de bifurcation (85) sur les deux côtés du cadre (80).

11. Structure d'entraînement de moyeu selon la revendication 10, où le connecteur électrique (15) et le premier bloc de montage (16) sont agencés comme une combinaison pour être fixés communément à l'arbre de moyeu (10), et l'écrou de retenue (18) et le deuxième bloc de montage (19) sont deux parties séparées fixées individuellement à l'arbre de moyeu (10).
